# EUROPEAN PATENT APPLICATION

(11) **EP 1 995 654 A1**
(43) Date of publication of application: **26.11.2008**
(21) Application number: 07720349.5
(22) Date of filing: 07.03.2007
(51) Int. Cl.: G05D 3/00

(54) **POSITION CONTROL METHOD, POSITION CONTROL DEVICE AND ELECTRIC DEVICE INCLUDING THE POSITION CONTROL DEVICE**

(30) Priority: 15.03.2006 CN 200610070864
(71) Applicant: POSITEC POWER TOOLS (SUZHOU) CO., LTD., Suzhou 215006 (CN)
(72) Inventor: ZHOU, Xuejun, Jiangsu 215006 (CN); WANG, Xin, Jiangsu 215006 (CN)
(74) Representative: Jeannet, Olivier
(86) International application number: PCT/CN2007/000735
(87) International publication number: WO 2007/104239

(57) **Abstract**

A position control method, a position control device and an electric device and an electric device including the position control device are provided. The position control device includes a common motor (13), a performing unit (20) coupled to the motor to perform position change, a pulse generator (10) generating alterable pulse signals, a process unit (11) continuously collecting and processing the pulse signals and generating pulse width modulated signals, a coupling circuit (12) which connects the processing unit and the common motor and sends the pulse width modulated signals to the motor, the common motor receiving and performing the pulse width modulated signals and driving the performing unit to change its position. The position control device can perform real time open-loop control of position change.

## Description

### BACKGROUND OF THE INVENTION

### 1. Field of the Invention

The present invention relates generally to a position control method, a control device and an electric device including the device, and more particularly, to an open-loop position control method, which uses a common motor to realize stepping and successive position change, and a control device and an electric device including the device.

### 2. The Related Arts

In many applications, position change of a moving part needs a relatively fast motion and a relatively slow motion to satisfy the requirements for movement. Such movements include control and adjustment for changes of angle and displacement, such as rotation of a turntable or swing of a supporting arm of a miter saw, which is a power tool. Specifically, to cut a work piece slantwise at an angle of 30 degrees, the supporting arm must be swung to be at a 30-degree angle with respect to the turntable. Normally, for example, a manual operation is first taken to quickly move from 0 degree to an angular position in the proximity of 30 degrees, and fine adjustment is carried out slowly and manually to precisely reach 30 degrees. However, besides inconvenience of operation and being time- and effort-consuming, such a manual operation of the supporting arm is imprecise, leading to imprecise position control and reduction of machining precision.

To improve the accuracy of control, a server motor is also suggested, such as Chinese Publication Patent No. 1253866. However, using the server motor to realize precise position control makes the manufacturing costs very high, and is particularly detrimental to applications and polarization in the field of non-digital control.

### SUMMARY OF THE INVENTION

An objective of the present invention is to provide a position control method, which is simple and practicable.

Another objective of the present invention is to provide an open-loop control device that employs a common motor to drive a performing unit for realizing stepping and successive position change.

A further objective of the present invention is to provide a position control device that is of low manufacturing costs and excellent operability.

A further objective of the present invention is to provide a position control device which is suitable for applications the non-digital control field and provides high precision.

Yet a further objective of the present invention is to provide an electric device that realizes position control in a convenient and precise manner.

A position control method comprises the following steps: using a pulse generator 10 to generate alterable pulse signals, a processing unit 11 collecting the pulse signals and determining directions and frequencies of the pulse signals to thereby generate corresponding pulse width modulated signals, an H-bridge circuit feeding the pulse width modulated signals to a common motor 13, the common motor 13 receiving and executing the pulse width modulated signals and driving a performing unit 20, and the performing unit 20 performing change of position. The processing unit 11 continuously collects the pulse signals generated by the pulse generator 10.

A position control device comprises a common motor 13 and a performing unit 11 connected to the common motor 13 to perform change of position. The position control device further comprises a pulse generator 10 that generates alterable pulse signals; a processing unit 11 that continuously collects and processes the pulse signals to generate corresponding pulse width modulated signals; and a coupling circuit 12 that connects the processing unit 11 and the common motor 13. The coupling circuit 12 feeds the pulse width modulated signals to the common motor 13, and the common motor 13 receives and executes the pulse width modulated signals to drive the performing unit 20 to perform the change of position. The pulse signals generated by pulse generator 10 comprise direction and frequency. The processing unit 11 generates corresponding fixed-width frequency modulated signals. The coupling circuit 12 comprises an H-bridge circuit.

An electric device comprises a working element 4 and a main motor 7 that drives operation of the working element. The electric device further comprises at least a position control device and the position control device comprises a common motor 13; a performing unit 20 that is connected to the common motor 13 to perform change of position; a pulse generator 10 that generates alterable pulse signals; a processing unit 11 that continuously collects and processes the pulse signals to generate corresponding pulse width modulated signals; and a coupling circuit 12 that connects the processing unit 11 and the common motor 13. The coupling circuit 12 feeds the pulse width modulated signals to the common motor 13 and the common motor 13 receives and executes the pulse width modulated signals to drive the performing unit 20 to perform the change of position. The pulse signals generated by pulse generator 10 comprise direction and frequency. The processing unit 11 generates corresponding fixed-width frequency modulated signals. The coupling circuit 12 comprises an H-bridge circuit.

The effectiveness of the technique solution in accordance with the present invention is that since the present invention provides an open-loop control method, the direction and speed of position change is completely controlled by an operator and thus the immediateness of position change is ensured; the control solution employs a pulse generator 11 and the common motor 13, which make the manufacturing cost low and benefit popularization and applications; the coupling circuit 12 is simply an electric circuit and thus, the performing unit 20 can rapidly respond to an input from the pulse generator 10; and the use of an H-bridge circuit ensures the performance of starting and braking function of the common motor 13. Conclusively, the position control method, the position control device and the electric device including the position control device in accordance with the present invention sufficiently ensure the precision and the immediateness of position change.

### BRIEF DESCRIPTION OF THE DRAWINGS

Fig. 1 illustrates a position control principle in accordance with the present invention;

Fig. 2 illustrates output signals generated by a pulse generator in accordance with the present invention;

Fig. 3 illustrates connection between an H-bridge coupling circuit and a common motor in accordance with the present invention;

Fig. 4 is a side elevational view illustrating a miter saw including a position control device in accordance with the present invention;

Fig. 5 is a rear back view of Fig. 4; and

Fig. 6 is a cross-section view taken along the line A-A of Fig. 5,

wherein reference numeral 1 indicates a base, reference numeral 2 is a turntable, reference numeral 3 is a supporting arm, reference numeral 4 is a working element, reference numeral 5 represents a locking handgrip, reference numeral 6 represents a swing pivot, reference numeral 7 is a main motor, reference numeral 8 is an extending area, reference numeral 10 is a pulse generator, reference numeral 11 is a processing unit, reference numeral 12 is a coupling circuit, reference numeral 13 is a common motor, reference numeral 20 is a performing unit, reference numeral 21 is a motor output spindle, reference numeral 22 is a first gear, and reference numeral 23 is a second gear.

### DETAILED DESCRIPTION OF THE PREFERRED EMBODIMENT

In the following, the present invention will be described in details with respect to a preferred embodiment thereof, reference being had to the attached drawings.

An attempt of the present invention is to use a common motor 13 to perform precision open-loop control of position change and replacing control systems based on servo motors or step motors, which are of high costs. The position change may include changes of angle and displacement and is commonly applicable to position change in the field of mechanical or electro-mechanical tools. In the preferred embodiment of the present invention, the present invention is described with reference to the swinging operation of a supporting arm 3 of a miter saw of power tools. However, those having ordinary skills in the art may contemplate various other applications, such as position change of a cutter frame or wheel of a lawn mower in order to effect cutting of grass at different heights.

The common motor 13 employed in the present invention is defined relative to servo motors and may include alternating current (AC) or direct current (DC) non-servo motors.

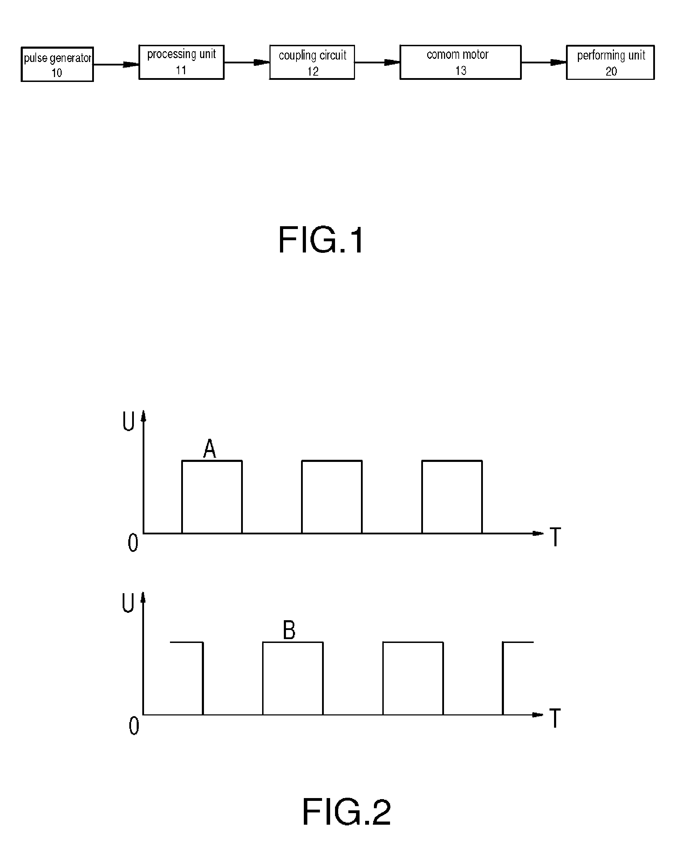

Referring to both Figs. 1 and 2, an input to the position control device is realized through a pulse generator 10. The pulse generator 10 may be an encoder. When it is desired to perform position change by the position control device, firstly, various input signals are supplied through an input port of for example a handgrip of the pulse generator 10, wherein the input signals include direction and velocity. According to speed and direction of the rotation of the handgrip, the pulse generator 10 correspondingly generates two series of pulse signals A and B. The pulse signals A and B are completely determined by the input signal. Normally, the direction of the input signal determines the difference of the phase between the pulse signals A and B, and the frequency or the pulse width of the pulse signals A and B are determined by the speed of the input signal of the pulse generator 10. When the input signal is fast, the frequency of the pulse signals A and B is correspondingly high, or the pulse width thereof is wide. If the input signal sustains for a long period, then the output of the pulse signals A and B of the pulse generator 10 is also sustained for a long period.

Since the pulse generator 10 can be a common encoder unit, and since it allows a user to change the speed and direction of input immediately to effect immediate adjustment of the input according to the working status of the performing unit, this way of input realized through the pulse generator 10, as compared to the way of input effected by a high-low speed switch that only allows for fixed speed input, provides a substantial improvement in the immediateness of control and also realizes easy operation in which the direction signal and the speed signal can be changed at the same time using a single input port; and further, the pulse generator 10 is of low costs.

An output of the pulse generator 10 is connected to an input of a processing unit 11, wherein the processing unit 11 can be MCU, PLC, or CPU. The processing unit 11, once energized, continuously collects the states of output signals from the pulse generator 10. According to the existence or not and the difference in frequency and pulse width of the collected pulse signals A and B from the pulse generator 10, the processing unit 11 generates corresponding pulse width modulated signals.

The direction of the pulse width modulated signal is determined by the phase difference between the signals A and B. For example, in angle position control, the processing unit 11, after collecting the pulse signals A and B and carrying out proper calculation, determines that a performing unit 20 needs to perform movement in a clockwise direction, and the outputted pulse width modulated signal drives the common motor 13 to cause the performing unit 20 to do angular change in the clockwise direction. If, after the calculation, it is determined that the performing unit 20 needs to do movement in a counterclockwise direction, then the outputted pulse width modulated signal drives the common motor 13 to cause the performing unit 20 to do angular change in the counterclockwise direction. Certainly, these can be predetermined artificially.

In the instant preferred embodiment, the processing unit 11 generates fixed-width frequency modulated signals. In other words, the processing unit 11 bases on various pulse widths and frequencies of the collected pulse signals A and B to generate a fixed-width frequency modulated signal that has a fixed pulse width and a frequency varying with the frequency or pulse width of the pulse signals A and B. In the instant embodiment, the pulse width of each individual pulse of the fixed-width frequency modulated signal is a step span that the performing unit 20 carries out position change in a stepping fashion. Certainly, the position control device can set different step spans according to different applications, and it is possible to set in advance different pulse widths for the fixed-width frequency modulated signal. However, it is noted that the generation of the pulse width modulated signal is not limited to the fixed-width frequency modulated signal, and may also be a fixed-frequency width modulated signal or a width and frequency modulated signal, which are commonly referred to as a pulse width modulation (PWM) signal.

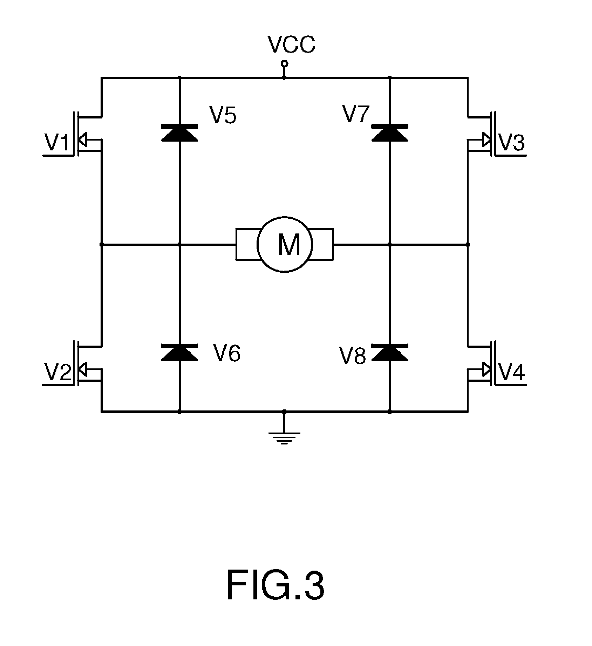

In the preferred embodiment, a coupling circuit 12, which is an H-bridge circuit, connects between the processing unit 11 and the common motor 13. An output of the processing unit 11 is connected to four input ports of the H-bridge circuit illustrated in Fig. 3. The four input ports of the H-bridge circuit are respectively a first power switch element V1, a second power switch element V2, a third power switch element V3 and a fourth power switch element V4. A first diode V5, a second diode V6, a third diode V7 and a fourth diode V8 are respectively connected in parallel to and between two terminals of each of the power switch elements. Two terminals of the common motor 13 are respectively connected to the connection between the first power switch element V1 and the second power switch element V2 and the connection between the third power switch element V3 and the fourth power switch element V4. An end of the H-bridge circuit is connected to a power source VCC and another end thereof is grounded. The power switch elements used here can be triodes or metal-oxide-semiconductor field-effect transistors (MOSFETs).

The H-bridge circuit bases on the pulse width modulated signal applied to the four input ports thereof to control the rotation direction of the common motor 13. Specifically, for example, when the pulse width modulated signal is supplied between the first power switch element V1 and the fourth power switch element V4, the common motor 13 rotates in the clockwise direction. When the pulse width modulated signal is supplied between the second power switch element V2 and the third power switch element V3, the common motor 13 rotates in the counterclockwise direction. Certainly, these directions can be artificially set.

When the pulse width modulated signal supplied to the H-bridge circuit is a signal of a relatively high frequency, an effective value received by the common motor 13 is a continuous value and, correspondingly, the common motor 13 drives the performing unit 20 to perform continuous position change. When the pulse width modulated signal supplied to the H-bridge circuit is a signal of a relatively low frequency, the effective values received by the common motor 13 are discrete values, and thus, the common motor 13 drives the performing unit 20 to perform position change in a stepping fashion. For common motors 13 having different powers, whether the effective value of the received pulse width modulated signals is continuous or discrete is determined by the frequency of the pulse width modulated signal.

Certainly, it is noted here that other electronic circuits can be used to perform transmission of the signals. As compared to connection realized between the processing unit 11 and the common motor 13 by a relay and associated circuit, the use of the H-bridge circuit can provide operation immediateness between the processing unit 11 and the common motor 13, thereby eliminating time transfer caused by the mechanical operation of the relay.

In the following, an application of the position control device to a miter saw, which is an electric device, will be illustrated to further explain the practice of the present invention and to highlight the advantages thereof.

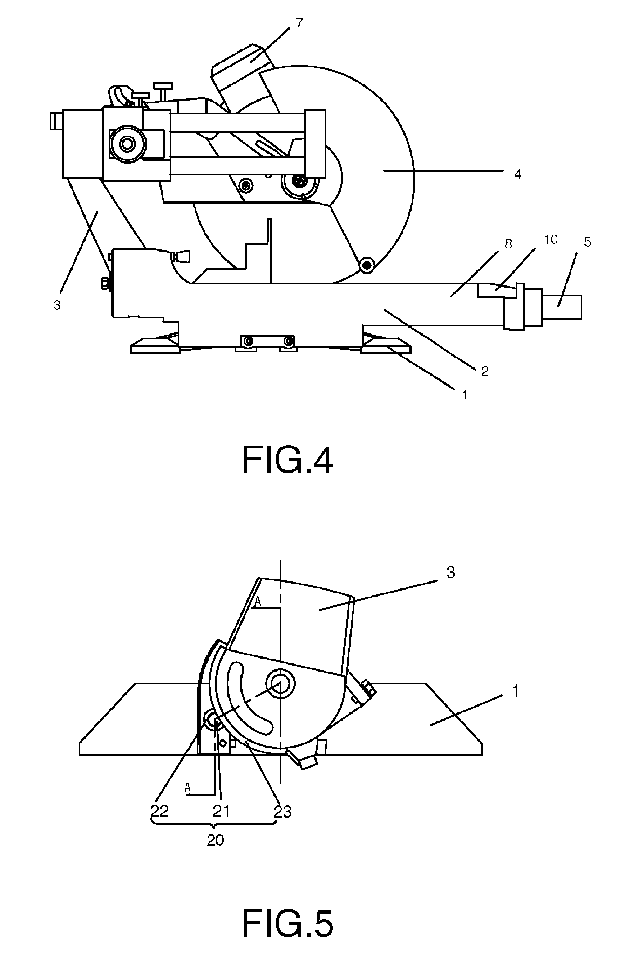

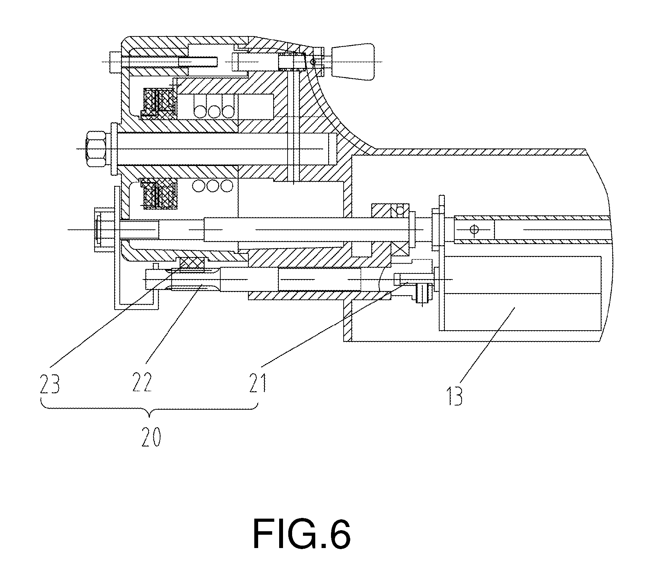

Referring to Figs. 4, 5, and 6, the electric miter saw include a base 1, a turntable 2 rotatable about a vertical central axis of the base 1, and a supporting arm 3 arranged behind the turntable 2 and rotatable about a swing pivot 6. An end pivot of the supporting arm is coupled with a working element 4 and a main motor 7. A front end of the turntable 2 forms a frontward extending area 8. The extending area 8 functions to carry the pulse generator 10. The turntable 2 is configured in this way so as to facilitates operation to be carried out by a user at a location away from the working element 4, thereby preventing the occurrence that the user is hurt by the working element 4, and also allows the user to carry out control and adjustment of the positions of the supporting arm 3 and the turntable 2 by staying in front of the stage without approaching the rear side or lateral side of the stage for carrying out control and locking of the position of the supporting arm 3.

The common motor 13 is disposed in the turntable 2. An end of a motor output spindle 21 is coupled with a first gear 22 with which a second gear 23 fixed to a lower end of the supporting arm 3 engages. When the signals supplied from the pulse generator 10 are such that a counterclockwise one is faster, the processing unit 11 disposed in the base 1, after carrying out proper processing, generates an output of a pulse width modulated signal that has a relatively high frequency. At this time, the common motor 13 receives an effective value that is a continuous value and thus carries out continuous rotation in the counterclockwise direction. The first gear 22 fixedly coupled to the end of the motor output spindle 21 starts to synchronously rotate and the first gear 22 drives the second gear 23 to rotate continuously in a clockwise direction, thereby driving the supporting arm 3 to continuously swing in the clockwise direction and realizing a substantial displacement of the supporting arm 3 with respect to the turntable 2. This is often referred to as fast position adjustment of the miter saw supporting arm 3 in this art. When the signals supplied from the pulse generator 10 are such that the counterclockwise one is slower, the processing unit 11 disposed in the base 1, after carrying out proper processing, generates an output of a pulse width modulated signal that has a relatively low frequency. At this time, the common motor 13 receives an effective value that is a discrete value and thus causes the first gear 22 to carry out stepping movements in the counterclockwise direction. The first gear 22 drives the second gear 23 that is in mating engagement therewith to carry out stepping movements in a clockwise direction, thereby causing the supporting arm 3 to perform stepping swings with respect to the turntable 2 and realizing a minor displacement of the supporting arm 3 with respect to the turntable 2. This is referred to as slow position adjusting or fine position adjustment of the miter saw supporting arm 3 in this art. Similarly, when the signal supplied from the pulse generator 10 is clockwise, it is possible to respectively realize continuous swing and stepping swing of the supporting arm 3 with respect to the turntable 2 in the counterclockwise direction, and repeated description will be omitted here. Since the engagement between the first gear 22 and the second gear 23 does not have a locking function, to allow an operator to lock the control position, in the instant embodiment, a locking handgrip 5 is provided at an end of the extending area of the turntable 2 to secure the supporting arm 3 at a determined position. Certainly, the transmission realized by gear and rack can be replaced with a worm and worm gear structure to realize a self-locking function.

It is noted here that the positional arrangements of the pulse generator 10, the processing unit 11, the coupling circuit 12, and the common motor 13 can be changed. For example, the common motor 13 can be arranged. In the preferred embodiment described herein, the performing unit 20 includes the motor output spindle 21, the first gear 22, the second gear 23, and the supporting arm 3. However, those having ordinary skills in the art can easily contemplate using other transmission devices to replace the gear engagement mentioned herein.

For various potential applications that the position control method and the position control device in accordance with the present invention can be used in electric devices and other fields of electro-mechanics, such as rotation of a turntable of a sliding saw with respect to a base, position change of a cutter frame or wheel of a lawn mower, the description will be omitted herein.

## Claims

1. A position control method comprising the following steps: using a pulse generator (10) to generate alterable pulse signals; a processing unit (11) collecting the pulse signals and determining directions and frequencies of the pulse signals to thereby generate corresponding pulse width modulated signals; an H-bridge circuit feeding the pulse width modulated signals to a common motor (13); the common motor (13) receiving and executing the pulse width modulated signals and driving a performing unit (20); and the performing unit (20) performing change of position.

2. The position control method as claimed in Claim **1,** wherein the processing unit (11) continuously collects the pulse signals generated by the pulse generator (10).

3. A position control device comprising a common motor (13) and a performing unit (20) connected to the common motor (13) to perform change of position, **characterized in that** the position control device further comprises a pulse generator (10) that generates alterable pulse signals; a processing unit (11) that continuously collects and processes the pulse signals to generate corresponding pulse width modulated signals; and a coupling circuit (12) that connects the processing unit (11) and the common motor (13), the coupling circuit (12) feeding the pulse width modulated signals to the common motor (13), the common motor (13) receiving and executing the pulse width modulated signals to drive the performing unit (20) to perform the change of position.

4. The position control device as claimed in Claim **3, characterized in that** the pulse signals generated by pulse generator (10) comprise direction and frequency.

5. The position control device as claimed in Claim **3** or **4, characterized in that** the processing unit (11) generates corresponding fixed-width frequency modulated signals.

6. The position control device as claimed in Claim 5, **characterized in that** the coupling circuit (12) comprises an H-bridge circuit.

7. An electric device comprising a working element (4) and a main motor (7) that drives operation of the working element, **characterized in that** the electric device further comprises at least a position control device and the position control device comprises a common motor (13); a performing unit (20) that is connected to the common motor (13) to perform change of position; a pulse generator (10) that generates alterable pulse signals; a processing unit (11) that continuously collects and processes the pulse signals to generate corresponding pulse width modulated signals; and a coupling circuit (12) that connects the processing unit (11) and the common motor (13), the coupling circuit (12) feeding the pulse width modulated signals to the common motor (13), the common motor (13) receiving and executing the pulse width modulated signals to drive the performing unit (20) to perform the change of position.

8. The electric device as claimed in Claim **7, characterized in that** the pulse signals generated by pulse generator (10) comprise direction and frequency.

9. The electric device as claimed in Claim **7** or **8, characterized in that** the processing unit (11) generates corresponding fixed-width frequency modulated signals.

10. The electric device as claimed in Claim **9, characterized in that** the coupling circuit (12) comprises an H-bridge circuit.
